# EUROPEAN PATENT APPLICATION

(11) **EP 3 307 005 A1**
(43) Date of publication of application: **11.04.2018**
(21) Application number: 16803515.2
(22) Date of filing: 03.06.2016
(51) Int. Cl.: H04W 72/12, H04W 16/14, H04W 16/32, H04W 72/08

(54) **USER TERMINAL, WIRELESS BASE STATION, AND WIRELESS COMMUNICATION METHOD**

(30) Priority: 05.06.2015 JP 2015114900
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); JIANG, Yu, Beijing 100190 (CN); LIU, Liu, Beijing 100190 (CN); JIANG, Huiling, Beijing 100190 (CN)
(74) Representative: Hoffmann Eitle
(86) International application number: PCT/JP2016/066623
(87) International publication number: WO 2016/195084

(57) **Abstract**

The present invention is designed to reduce the decrease of throughput in cells in which pre-transmission listening is employed (for example, unlicensed bands). A user terminal communicates by using at least a first cell in which listening is executed before signals are transmitted, and has a receiving section that receives DL signals that contain UL transmission commands, and a control section that controls UL transmission based on the UL transmission commands, and the control section controls whether or not to apply listening to UL transmission based on DL signals transmitted in the first cell.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (also referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Rel. 10/11).

In relationship to LTE-A systems, a HetNet (Heterogeneous Network), in which small cells (for example, pico cells, femto cells and so on), each having local a coverage area of a radius of approximately several tens of meters, are formed within a macro cell having a wide coverage area of a radius of approximately several kilometers, is under study. Also, in relationship to HetNets, a study is in progress to use carriers of different frequency bands between macro cells (macro base stations) and small cells (small base stations), in addition to carriers of the same frequency band.

Furthermore, in relationship to future radio communication systems (Rel. 13 and later versions), a system ("LTE-U" (LTE Unlicensed)) to run an LTE system not only in frequency bands that are licensed to communications providers (operators) (licensed bands), but also in frequency bands that do not require license (unlicensed bands), is under study. In LTE-U operations, a mode that is premised upon coordination with licensed band LTE is referred to as "LAA" (Licensed-Assisted Access) or "LAA-LTE." Note that systems that run LTE/LTE-A in unlicensed bands may be collectively referred to as "LAA," "LTE-U," "U-LTE" and so on.

While a licensed band refers to a band in which a specific operator is allowed exclusive use, an unlicensed band (also referred to as a "non-licensed band") refers to a band which is not limited to a specific operator and in which radio stations can be provided. Unlicensed bands include, for example, the 2.4 GHz band and the 5 GHz band where Wi-Fi (registered trademark) and Bluetooth (registered trademark) can be used, the 60 GHz band where millimeter-wave radars can be used, and so on. Studies are in progress to use these unlicensed bands in small cells.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"

### Summary of Invention

### Technical Problem

Existing LTE presumes operations in licensed bands, and therefore each operator is allocated a different frequency band. However, unlike a licensed band, an unlicensed band is not limited to use by a specific provider. Furthermore, unlike a licensed band, an unlicensed band is not limited to use in a specific radio system (for example, LTE, Wi-Fi, etc.). Consequently, there is a possibility that the frequency band which a given operator uses in LAA overlaps the frequency band which another operator uses in LAA and/or Wi-Fi.

When an LTE/LTE-A system (LTE-U) is run in an unlicensed band, different operators and/or non-operators may set up radio access points (also referred to as "APs," "TPs," etc.) and/or radio base stations (eNBs) without even coordinating and/or cooperating with each other. In this case, detailed cell planning is not possible, and, furthermore, interference control is not possible, and therefore significant cross-interference might be produced in the unlicensed band, unlike a licensed band.

In order to prevent cross-interference in unlicensed bands, a study is in progress to allow an LTE-U base station/user terminal to perform "listening" before transmitting signals and check whether other base stations/user terminals are engaged in communication. This listening operation is also referred to as "LBT" (Listen Before Talk).

In LTE-U systems and/or LAA systems, too, there is a demand to introduce LBT functions for UL transmission (UL-LBT) in user terminals in order to prevent UL signals (uplink signals) from interference. Meanwhile, when a user terminal performs transmission operations for all UL signals based on the results of UL-LBT, this raises a problem that every UL transmission requires a time-overhead for LBT. This overhead has a threat of lowering the overall system throughput.

The present invention has been made in view of the above, and it is therefore an object of the present invention to provide a user terminal, a radio base station and a radio communication method that can reduce the decrease of throughput in cells where pre-transmission listening is employed (for example, unlicensed bands).

### Solution to Problem

A user terminal according to the present invention communicates by using at least a first cell in which listening is executed before signals are transmitted, and has a receiving section that receives DL signals that contain UL transmission commands, and a control section that controls UL transmission based on the UL transmission commands, and, in this user terminal, the control section controls whether or not to apply listening to UL transmission based on DL signals transmitted in the first cell.

### Advantageous Effects of Invention

According to the present invention, it is possible to reduce the decrease of throughput in cells in which pre-transmission listening is employed (for example, unlicensed bands).

### Brief Description of Drawings

FIG. 1A is a diagram to show a scenario to employ CA in licensed band cells and unlicensed band cells, FIG. 1B is a diagram to show a scenario to employ DC in a licensed band cell and an unlicensed band cell, and FIG. 1C is a diagram to show a scenario to employ SA in an unlicensed band cell;
FIG. 2 is a diagram to show an example of a burst period that is configured for transmission after DL-LBT;
FIG. 3 is a diagram to show an example of a case where UL transmission is made during a burst period that is configured for transmission after DL-LBT;
FIG. 4 is a diagram to show an example of a UL transmission method for use when the maximum burst length is 10 ms;
FIG. 5 is a diagram to show an example of a UL transmission method for use when the maximum burst length is 4 ms;
FIG. 6 is a diagram to show another example of a UL transmission method for use when the maximum burst length is 4 ms;
FIG. 7 is a diagram to show an example of a UL transmission method according to the first example;
FIG. 8A diagram to show an example of a table that shows the numbers of LBT-exempt UL subframes, and FIG. 8B is a diagram to show an example of a UL transmission method for use after DL LBT;
FIG. 9A is a diagram to show example of a table that shows the subframe type of each subframe, and FIG. 9B and FIG. 9C are diagrams, each showing an example of a UL transmission method for use after DL LBT;
FIG. 10A is a diagram to show an example of a table that shows whether or not LBT is applied to UL transmission, and FIG. 10B is a diagram to show an example of a UL transmission method for use after DL LBT;
FIG. 11 is a schematic diagram to show an example of a radio communication system according to the present embodiment;
FIG. 12 is a diagram to explain an overall structure of a radio base station according to the present embodiment;
FIG. 13 is a diagram to explain a functional structure of a radio base station according to the present embodiment;
FIG. 14 is a diagram to explain an overall structure of a user terminal according to the present embodiment; and
FIG. 15 is a diagram to explain a functional structure of a user terminal according to the present embodiment.

### Description of Embodiments

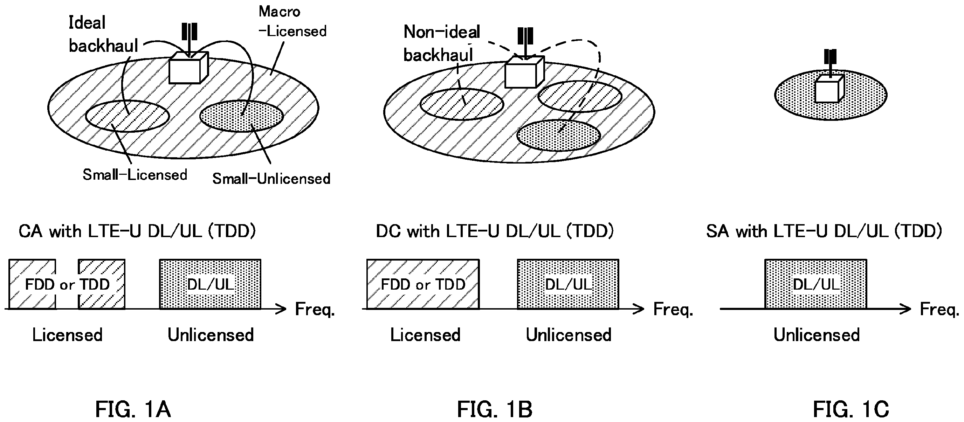

FIGs. 1 show examples of operation modes in a radio communication system (LTE-U) in which LTE is run in unlicensed bands. As shown in FIG. 1, there may be a plurality of possible scenarios to use LTE in unlicensed bands, such as carrier aggregation (CA), dual connectivity (DC) and stand-alone (SA).

FIG. 1A shows a scenario to employ carrier aggregation (CA) by using licensed bands and unlicensed bands. CA is a technique to bundle a plurality of frequency blocks (also referred to as "component carriers" (CCs), "carriers," "cells," etc.) into a wide band. Each CC has, for example, a maximum 20 MHz bandwidth, so that, when maximum five CCs are bundled, a wide band of maximum 100 MHz is provided.

In the example shown in FIG. 1A, cells (for example, a macro cell and/or a small cell) to use licensed bands and a cell (for example, a small cell) to use an unlicensed band employ CA. When CA is employed, one radio base station's scheduler controls the scheduling of a plurality of CCs. Based on this, CA may be referred to as "intra-base station CA" (intra-eNB CA).

In this example, the cell that uses an unlicensed band can be made a carrier that can support both DL transmission and UL transmission (for example, a TDD carrier). Note that FDD and/or TDD can be used in the licensed bands.

Furthermore, a (co-located) structure may be employed here in which a licensed band and an unlicensed band are transmitted and received via one transmitting/receiving point (for example, a radio base station). In this case, this transmitting/receiving point (for example, an LTE/LTE-U base station) can communicate with user terminals by using both the licensed band and the unlicensed band. Alternatively, it is equally possible to employ a (non-co-located) structure in which a licensed band and an unlicensed band are transmitted and received via different transmitting/receiving points (for example, one via a radio base station and the other one via an RRH (Remote Radio Head) that is connected with the radio base station).

FIG. 1B shows a scenario to employ dual connectivity (DC) by using a licensed band and an unlicensed band. DC is the same as CA in bundling a plurality of CCs (or cells) into a wide band. While CA is based on the premise that CCs are connected via ideal backhaul and are capable of coordinated control, which produces very little delay time, DC presumes cases in which cells are connected via non-ideal backhaul, which produces delay time that is more than negligible.

Consequently, in DC, cells are run by separate base stations, and user terminals communicate by connecting with CCs (or cells) that are run by different base stations in different frequencies. So, when DC is employed, a plurality of schedulers are provided individually, and these multiple schedulers each control the scheduling of one or more cells (CCs) managed thereunder. Based on this, DC may be referred to as "inter-base station CA" (inter-eNB CA). Note that, in DC, carrier aggregation (intra-eNB CA) may be employed per individual scheduler (that is, base station) that is provided.

The example shown in FIG. 1B illustrates a case where cells (including, for example, a macro cell) to use a licensed band and a small cell to use an unlicensed band employ DC. The cell that uses an unlicensed band can be made a carrier that can support both DL transmission and UL transmission (for example, a TDD carrier). Note that FDD and/or TDD can be used in the licensed band.

In the example shown in FIG. 1C, stand-alone (SA) is employed, in which a cell to run LTE by using an unlicensed band operates alone. Here, "stand-alone" means that the cell can communicate with terminals without employing CA or DC. In this case, the unlicensed band can be run in a carrier that can support both DL transmission and UL transmission (for example, a TDD carrier).

In the operation mode of CA shown in FIG. 1A, for example, it is possible to use a licensed band CC (macro cell) as a primary cell (PCell) and use an unlicensed band CC (small cell) as a secondary cell (SCell). Here, the primary cell (PCell) refers to the cell that manages RRC connection, handover and so on when CA is used, and is also a cell that requires UL communication to receive data, feedback signals and so on from user terminals. The primary cell is always configured in the uplink and the downlink. A secondary cell (SCell) is another cell that is configured apart from the primary cell when CA is employed. In secondary cells, the downlink or the uplink alone may be configured, or both the uplink and the downlink may be configured at the same time.

Note that, as shown in above FIG. 1A (CA), a mode to presume the presence of licensed-band LTE (licensed LTE) when running LTE-U is referred to as "LAA" (Licensed-Assisted Access) or "LAA-LTE." Note that systems that run LTE/LTE-A in unlicensed bands may be collectively referred to as "LAA," "LTE-U," "U-LTE" and so on.

In LAA, licensed band LTE and unlicensed band LTE are coordinated so as to allow communication with user terminals. LAA may be structured so that a transmission point (for example, a radio base station) to use a licensed band and a transmission point to use an unlicensed band are, when being a distance apart, connected via a backhaul link (for example, the CPRI (Common Public Radio Interface) and so on).

Now, with systems that run LTE/LET-A in unlicensed bands (for example, LAA systems), cases might occur where other operators' LTE, Wi-Fi or other systems are co-present. Consequently, for unlicensed bands, a study is in progress to execute "listening" before transmitting signals and control interference in the same frequency. In a carrier in which listening is configured, radio base stations and user terminals of a plurality of systems use the same frequency on a shared basis.

The use of listening can prevent interference between LAA and Wi-Fi, interference between LAA systems, and so on. Also, even when user terminals that can be connected are controlled independently for every operator that runs an LAA system, it is possible to reduce interference without learning the details of each operator's control, by means of listening.

Note that "listening" refers to the operation which a given transmission point (for example, a radio base station, a user terminal, etc.) performs before transmitting signals in order to check whether or not signals to exceed a predetermined level (for example, predetermined power) are being transmitted from other transmission points. Also, this "listening" performed by radio base stations and/or user terminals may be referred to as "LBT" (Listen Before Talk), "CCA" (Clear Channel Assessment), "carrier sensing," and so on.

For example, when LBT is employed in an LTE system, a transmission point (an LTE-U base station and/or a user terminal) performs listening (LBT, CCA) before transmitting UL signals and/or DL signals in an unlicensed. Then, if no signal from other systems (for example, Wi-Fi) and/or other LAA transmission points is detected, the transmission point carries out communication in the unlicensed band.

If received power that is equal to or lower than a predetermined threshold is measured in LBT, the transmission point judges that the channel is in the idle state (LBT_idle), and carries out transmission. When a "channel is in the idle state," this means that, in other words, the channel is not occupied by a specific system, and it is equally possible to say that the channel is "idle," the channel is "clear," the channel is "free," and so on.

On the other hand, when the received power that is measured in LBT exceeds a predetermined threshold, the transmission point judges that the channel is in the busy state (LBT_busy), and limits transmission. Procedures that are taken when listening yields the result "LBT-busy" include (1) making a transition to another carrier by way of DFS (Dynamic Frequency Selection), (2) applying transmission power control (TPC), (3) not making transmission (stopping transmission or waiting for transmission), and so on. In the event LBT_busy is yielded, LBT is carried out again with respect to this channel, and the channel becomes available for use only after it is confirmed that the channel is in the idle state. Note that the method of judging whether a channel is in the idle state/busy state based on LBT is by no means limited to this.

In view of the above, LBT is likely to be required even in LTE/LTE-A systems that are run in unlicensed bands (for example, LAA systems). For example, when a user terminal receives a command for UL transmission (UL grant) in an unlicensed band from a radio base station, the user terminal may make transmission only after UL transmission is judged to be possible based on LBT for UL transmission (UL-LBT), in every UL transmission (or every UL subframe). However, if every signal transmission (for example, every UL transmission subframe) has to be started based on the result of LBT, a time-overhead for LBT is produced in every UL transmission, which then has a threat of lowering the throughput.

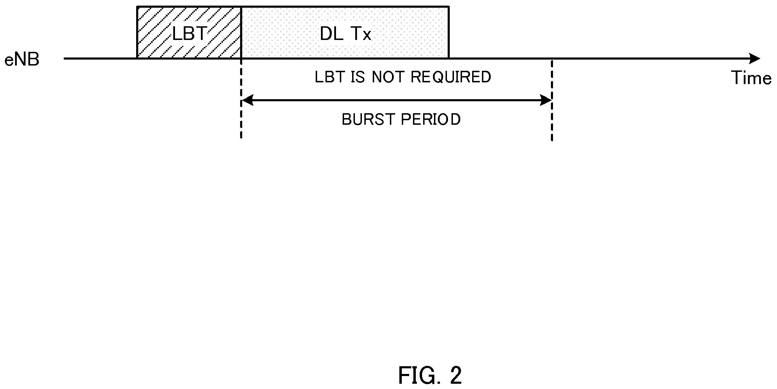

Meanwhile, a study is in progress to allow signal transmission without LBT for a predetermined period if the result of listening for DL transmission (DL-LBT) executed by a radio base station in an unlicensed band is LBT-idle (see FIG. 2). In cells where listening is employed, the period after listening (after LBT-idle is yielded), in which transmission can be made without executing LBT, is referred to as the "burst length" (also referred to as the "maximum burst length," the "maximum possible burst length," the "burst period," etc.).

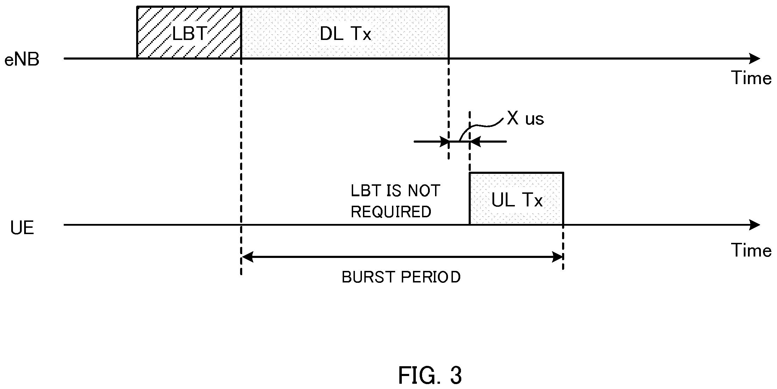

The present inventors have focused on the fact that, when a burst period is configured after listening for DL transmission, by using the portion in this burst period where DL transmission is not carried out for UL transmission, it is possible to allow user terminals to make UL transmission without using LBT. For example, given a burst period that is configured for transmission after DL-LBT executed by a radio base station, after DL transmission (or DL subframe) from the radio base station, a user terminal can make UL transmission without using UL-LBT (see FIG. 3).

In this case, the user terminal can be structured to make LBT-exempt UL transmission within a predetermined period X after a DL signal (or a DL subframe) is received. The predetermined period X is preferably made, for example, as short as the SIFS (Short IFS) that is introduced in the IEEE 802.11 series of wireless LAN standards. In IEEE 802.11, the SIFS is stipulated to be, for example, 16 µs. Since a user terminal carries out UL transmission within a predetermined period X after DL transmission, it is possible to reduce the occurrence of collisions that might occur when other systems and/or the like that execute LBT in the burst period judge on LBT-idle and start transmission.

In this way, by using burst periods that are configured for transmission after DL-LBT in UL transmission, it becomes possible to allow LBT-exempt UL transmission to user terminals, in addition to UL-required transmission. When a user terminal transmits UL signals without executing UL-LBT, it is possible to carry out more efficient UL transmission than LBT-required UL transmission, and achieve improved throughput.

In this case, the user terminal has to decide whether or not to apply DL-LBT to each UL transmission. For example, the user terminal has to decide whether the UL transmission timing (UL subframe) that is indicated in a UL grant is in a burst period in which UL transmission is allowed (whether or no LBT-exempt UL transmission is possible).

Now, in existing LTE systems/LTE-A systems, a user terminal controls UL transmission based on UL transmission commands (UL grants) from a radio base station. In this case, after a UL grant is received, the user terminal needs a predetermined period (normally, at least 4 ms) before making UL transmission. That is, after a UL grant is received, subframes in which a user terminal can make UL transmission appear at least 4 ms later

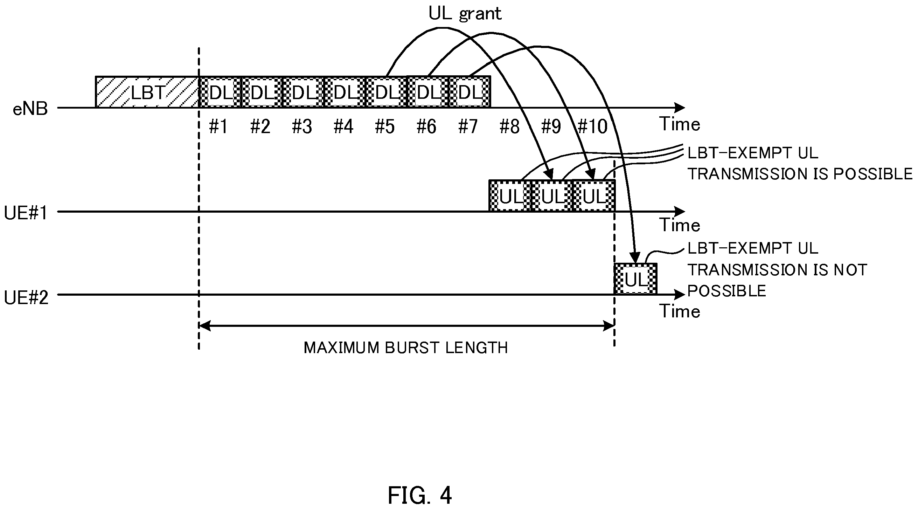

If the maximum burst length is sufficiently long, a radio base station can configure a DL subframe to transmit a UL grant and the UL transmission to command for transmission with this UL grant, in the same burst period (see FIG. 4). FIG. 4 shows a case in which the maximum burst length that is configured after DL-LBT (LBT-idle) is 10 ms.

In FIG. 4, the radio base station transmits UL grants to the first user terminal (UE #1) in the DL subframes of subframes #5 to #7 in a burst period. If the subframe that comes a predetermined period (for example, 4 ms) after a DL signal (UL grant) is received is in the burst period, the first user terminal can make LBT-exempt UL transmission. However, if a timing of UL transmission passes the maximum burst length, a user terminal (the second user terminal (UE #2) in FIG. 4) has to make the UL transmission by applying LBT.

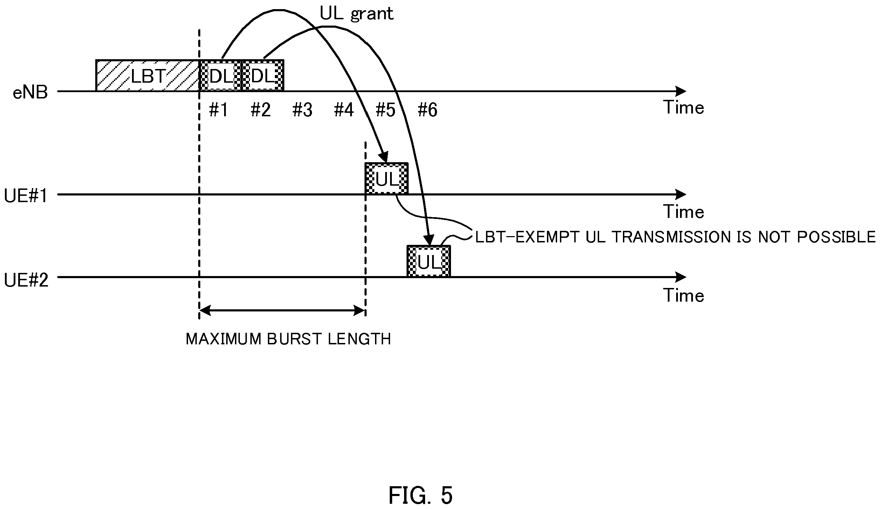

On the other hand, when the maximum burst length is a predetermined value (for example, 4 ms) or less, a DL subframe to transmit a UL grant and the UL transmission (UL subframe) to command for transmission with this UL grant cannot be configured in the same burst period (see FIG. 5). This is because the timing (subframe) 4 ms after a user terminal receives a UL grant that is transmitted in the burst period is outside the burst period. In this case, the user terminal cannot make LBT-exempt UL transmission.

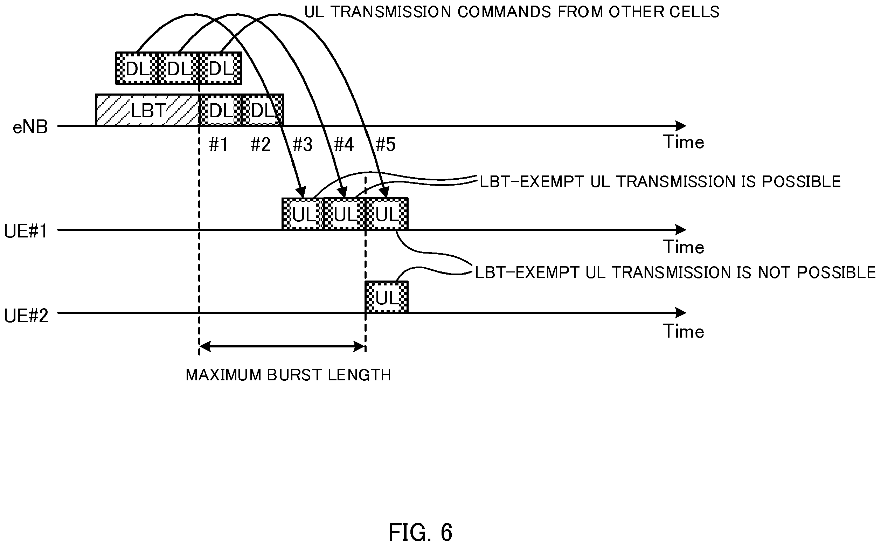

Meanwhile, the present inventors have found out that, even when the maximum burst length is configured to be equal to or less than a predetermined value, it is possible to command user terminals to make UL transmission in the burst period by sending UL grants from other cells (cross-carrier scheduling) (see FIG. 6). For example, a radio base station can report a command for UL transmission in an unlicensed band by using a licensed band with which a user terminal is connected, or by using another unlicensed band.

To be more specific, the radio base station, for example, transmits a UL grant to a user terminal from another cell, before DL-LBT is executed in an unlicensed band, or while DL-LBT is executed. Consequently, whether the user terminal can execute LBT-exempt UL transmission depends on the UL transmission timing (or the UL subframe) specified by the UL grant and the timing the burst period starts (the result of DL-LBT). In other words, this depends on whether the radio base station gains the channel access right (LBT-idle) in the unlicensed band by the UL transmission timing specified by the UL grant, and whether this UL transmission timing is configured within the burst period.

In this way, when carrying out UL-LBT-exempt UL transmission in a predetermined period, a user terminal needs a method that allows the user terminal to adequately decide whether or not to apply LBT to UL transmission. So, the present inventors have come up with the idea that, even when the maximum burst length in a predetermined cell is a predetermined value (for example, 4 ms) or less, a user terminal may control whether or not to apply LBT to UL transmission in the predetermined cell by using DL signals transmitted in this burst period. By this means, even when a user terminal transmits UL signals in a cell that employs listening, LBT-exempt UL transmission can be carried out adequately, and the decrease of throughput can be reduced.

Also, the present inventors have also come up with the idea that, when the maximum burst length in a predetermined cell is longer than a predetermined value (for example, 4 ms), whether or not LBT is applied to UL transmission may be reported to a user terminal by using downlink control information (for example, UL grants) that commands UL transmission in unlicensed bands.

Now, the above-described embodiment will be described below in greater detail with reference to the accompanying drawings. Note that, although the present embodiment will be described assuming that a cell that employs listening is an unlicensed band (unlicensed band CC) and a cell that does not employ listening is a licensed band (licensed band CC), this is by no means limiting. The present embodiment is applicable to UL transmission in cells that employ listening.

Also, LBT schemes that are applicable to the present embodiment include FBE (Frame Based Equipment) and LBE (Load Based Equipment). FBE is implemented in a fixed frame cycle, and, in this mechanism, transmission is carried out if the result of executing carrier sensing in a predetermined frame shows that the channel is available for use, and, if the channel cannot be used, transmission is not carried out but is placed on standby until the carrier sensing timing in the next frame. On the other hand, in the mechanism of LBE, the carrier sensing duration is extended when the result of carrier sensing shows that the channel cannot be used, and carrier sensing is continued until the channel becomes available for use.

### (First Example)

With a first example, a case will be described in which a user terminal decides the channel access method for UL transmission (for example, whether or not to apply LBT) based on whether or not DL signals that are transmitted during the burst period are detected (implicit indication). Note that, although example cases will be illustrated in the following description in which the maximum burst length (burst period) in a given cell is 4 ms, this is by no means the only applicable maximum burst length.

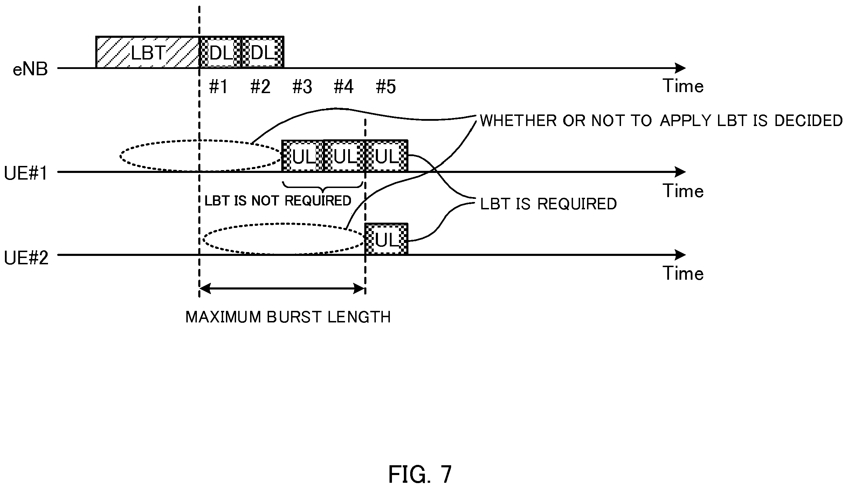

FIG. 7 shows a case in which a 4-ms burst period is configured after DL-LBT (LTB-idle), and in which a radio base station transmits DL signals in two subframes after DL-LBT (subframes #1 and #2). In this case, a user terminal can make UL transmission, without applying LBT, in the period following the DL transmission (here, in subframes #3 and #4).

So, the user terminal performs the operation for detecting DL signals which the radio base station transmits in an unlicensed band, and judges that LBT-exempt UL transmission is possible if the subframes where UL transmission is commanded are included in the burst period and DL transmission continues until immediately before one or more consecutive UL subframes. In this way, every user terminal controls UL transmission by checking whether DL signals are transmitted up to the subframe immediately before the timing for UL transmission (UL subframes), so that it is possible to prevent collisions that might occur when other systems and/or the like decide on LBT-idle and start transmission.

Information about the maximum burst length (burst period) may be reported to a user terminal through higher layer signaling (for example, RRC signaling), or may be specified in advance in the specification. Also, a user terminal can learn UL transmission timings (UL transmission subframes) based on UL grants transmitted from the radio base station.

In this way, a user terminal can control whether or not to apply LBT to UL transmission based on information about the maximum burst length, UL transmission timings that are specified by UL grants transmitted from a radio base station and whether or not DL signals are detected in an unlicensed band. The radio base station can transmit downlink control information that includes UL grants to the user terminal by using other cells (for example, licensed bands) (cross-carrier scheduling).

Now, referring to FIG. 7, the first user terminal (UE #1) and the second user terminal (UE #2) learn about the maximum burst length after DL-LBT (here, 4 ms) based on reports that are sent via higher layer signaling (or based on information that is set forth in advance). Also, a case is illustrated in FIG. 7 where UE #1 is commanded unlicensed band UL transmission in subframes #3, #4 and #5, and UE #2 is commanded unlicensed band UL transmission in subframe #5. Subframes #3 and #4 are subframes within the burst period, and subframe #5 is a subframe outside the burst period.

After receiving a UL grant, a user terminal (either UE #1 or UE #2) performs the operation of detecting DL signals in an unlicensed band (for example, a serving LAA SCell) until the timing of the UL subframes specified by the UL grant arrives. If the total of the number of DL subframes that are detected up to immediately before the UL subframes that are specified and the number of these specified UL subframes does not exceed the maximum burst length, the user terminal judges that LBT-exempt UL transmission is possible.

In FIG. 7, UE #1 performs the operation of detecting DL signals in a licensed band until the UL subframe timing (here, subframe #3) where transmission is commanded arrives. Here, UE #1 detects DL signals in subframes #1 and #2. Consequently, by using subframe #3 in which transmission is already commanded, UE #1 makes UL transmission without applying LBT. UE #1 can likewise make LBT-exempt UL transmission in subframe #4. Meanwhile, UE #1 can judge that subframe #5 is outside the burst period, based on information about the maximum burst length, so that, in subframe #5, UE #1 carries out UL transmission by using LBT.

Similarly, UE #2 performs the operation of detecting DL signals in a licensed band until the UL subframe timing (here, subframe #5) where transmission is commanded arrives. In FIG. 7, UE #2 detects no DL signals in subframe #3 and subsequent subframes, and therefore judges that the transmission burst is cut here. Since no DL signals are detected up until immediately before subframe #5, where UL transmission is commanded, UE #2 carries out UL transmission by using LBT in subframe #5.

The user terminal can judge whether or not DL signals are detected based on whether or not at least one (or a combination) of cell-specific reference signals, downlink control information (DCI) that is configured in the common search space (CSS) and downlink control information that is configured in the user-specific search space (USS) is detected. Note that other DL signals and/or DL channels may be used to decide whether or not DL signals are detected.

In this way, a user terminal autonomously decides whether or not to execute LBT for UL transmission based on whether or not DL signals that are transmitted during the burst period after DL-LBT are detected, so that information as to whether or not to employ UL-LBT no longer needs to be reported to the user terminal. By this means, the overhead of DL signals can be reduced. Also, a user terminal decides whether or not to execute UL-LBT based on whether or not DL signals that are transmitted during the burst period after DL-LBT are detected, so that decisions for UL-LBT-exempt UL transmission can be made adequately, and the decrease of throughput can be reduced.

### (Second Example)

With a second example, a case will be described in which a user terminal decides the channel access method for UL transmission (for example, whether or not to apply LBT) based on information that is included in DL signals that are transmitted during the burst period (explicit indication).

A radio base station can include information about listening for UL transmission (UL-LBT) in a DL signal to be transmitted in an unlicensed band, and report this to a user terminal. When the subframe in which the DL signal is transmitted arrives, the user terminal can control whether or not to apply LBT to UL transmission (or UL subframes) in the next and subsequent subframes based on the information that is reported from the radio base station as to whether or not UL-LBT should be employed.

The radio base station can report commands for UL transmission in an unlicensed band (for example, an LAA SCell) to a user terminal via another cell (for example, a licensed band). In this case, the user terminal receives unlicensed band UL transmission commands (downlink control information) from the other cell, and receives information (downlink control information) about whether or not to apply LBT to UL transmission in the unlicensed band. By this means, UL transmission timings in the unlicensed band can be configured within the burst period, and, furthermore, the user terminal can make adequate decisions of whether or not to apply LBT to UL transmission.

As an identifier (RNTI: Radio Network Temporary Identifier) to link with downlink control information (DCI) that is transmitted in the unlicensed band, the radio base station can define and use a new RNTI. In this case, the radio base station can use the newly-defined RNTI and transmit downlink control information (DCI) that includes information as to whether or not LBT is applied to UL transmission. The user terminal can decode the DCI by using this RNTI.

Alternatively, the radio base station may transmit information about LBT for UL transmission by using existing DCI formats (for example, DCI formats 3/3A).

For this information about LBT for UL transmission, the radio base station can report the number of LBT-exempt UL subframes (for example, the number of consecutive UL subframes that are LBT-exempt) (reporting method 1). Alternatively, as information about LBT for UL transmission, the radio base station can report whether or not LBT is applied to each subframe, by using a bitmap (reporting method 2). Each reporting method will be described below.

### (Reporting Method 1)

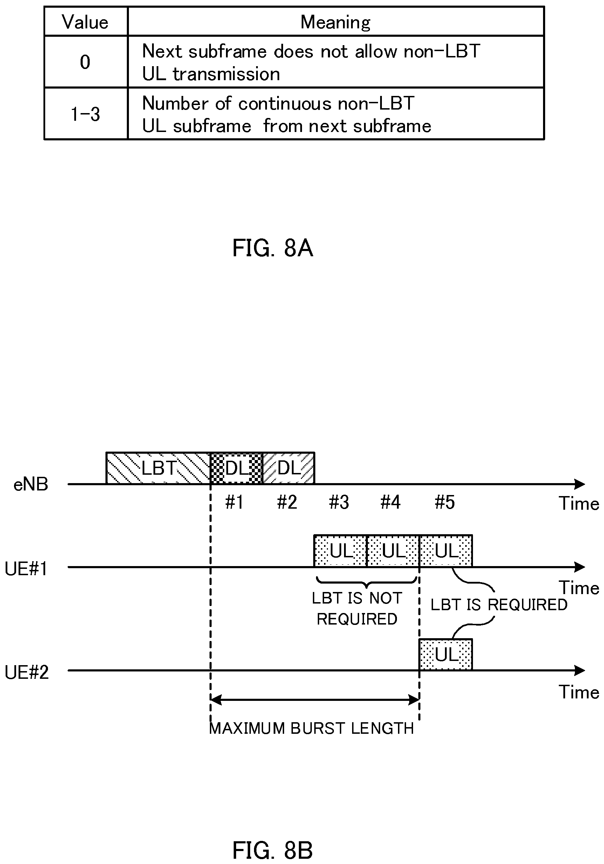

The radio base station can report information about the number of UL subframes that become LBT-exempt after the next subframe, to a user terminal, by using a DL signal (DL subframe). For example, the radio base station configures a two-bit field in downlink control information (DCI), and, by using this bit field, reports information about the number of UL subframes that become LBT-exempt after the next subframe, to a user terminal. The user terminal can control UL transmission based on a table that corresponds to the bit information that is reported (index) (see FIG. 8A).

The table of FIG. 8A shows that LBT-exempt UL transmission is not allowed in the next subframe the bit field value is "0." When the value of the bit field is "0," the user terminal can judge that the next subframe is a DL subframe or a UL subframe that employs LBT. Also, the user terminal can decide whether the next subframe is a DL subframe or a UL subframe based on whether or not a DL signal is detected and/or transmission is commanded with a UL grant. Even when this DCI cannot be detected, the user terminal can judge that the next subframe is a DL subframe or a UL subframe that employs LBT.

The table of FIG. 8A shows the numbers of UL subframes that become LBT-exempt after the next subframe when the bit field value is "1", "2" and "3." For example, when the value of the bit field is "1," the user terminal can judge that the next one subframe is an LBT-exempt UL subframe. Also, when the value of the bit field is "2," the user terminal can judge that the next two consecutive subframes are LBT-exempt UL subframes. Likewise, when the value of the bit field is "3," the user terminal can judge that the next three consecutive subframes are LBT-exempt UL subframes.

FIG. 8B shows a case in which a 4-ms burst period is configured after DL-LBT (LTB-idle), and in which a radio base station transmits DL signals in two subframes after DL-LBT (subframes #1 and #2). In this case, a user terminal can make UL transmission, without applying LBT, in two subframes following the DL transmission (here, subframes #3 and #4).

In the case illustrated in FIG. 8B, the radio base station can configure "2" in the bit field of the DL signal (which is, for example, downlink control information) of subframe #2, and transmit this signal. Based on the downlink control information received, a user terminal judges that the next two consecutive subframes (subframes #3 and #4) are subframes in which LBT-exempt UL transmission is allowed, and controls UL transmission accordingly. The first user terminal (UE #1), which is commanded UL transmission in subframes #3, #4 and #5, makes UL transmission without using LBT in subframes #3 and #4, in accordance with the DL signal that has been received. Meanwhile, in subframe #5, UE #1 makes UL transmission by using LBT.

Also, the radio base station can include bit information about LBT for UL transmission (for example, the number of UL-LBT-exempt UL subframes) in all DL subframes (subframes #1 and #2 in FIG. 8B). In this case, the radio base station can configure "0" in the bit field of the DL signal of subframe #1. When this bit field is not provided in a DL signal, a user terminal that is commanded UL transmission can operate to perform UL transmission by executing LBT.

Alternatively, the radio base station can include bit information about the number of UL-LBT-exempt UL subframes only in part of the DL subframes in an unlicensed band (subframe #2 in FIG. 8B). Part of the DL subframes here can be subframes where the next subframe is a UL subframe (that is, subframes that are immediately before UL subframes).

Note that, although a case has been shown with FIG. 8A where a bit field of two bits is provided, the present embodiment is by no means limited to this. The number of bits of the bit field can be configured as appropriate based on the maximum burst length and so on.

### (Reporting Method 2)

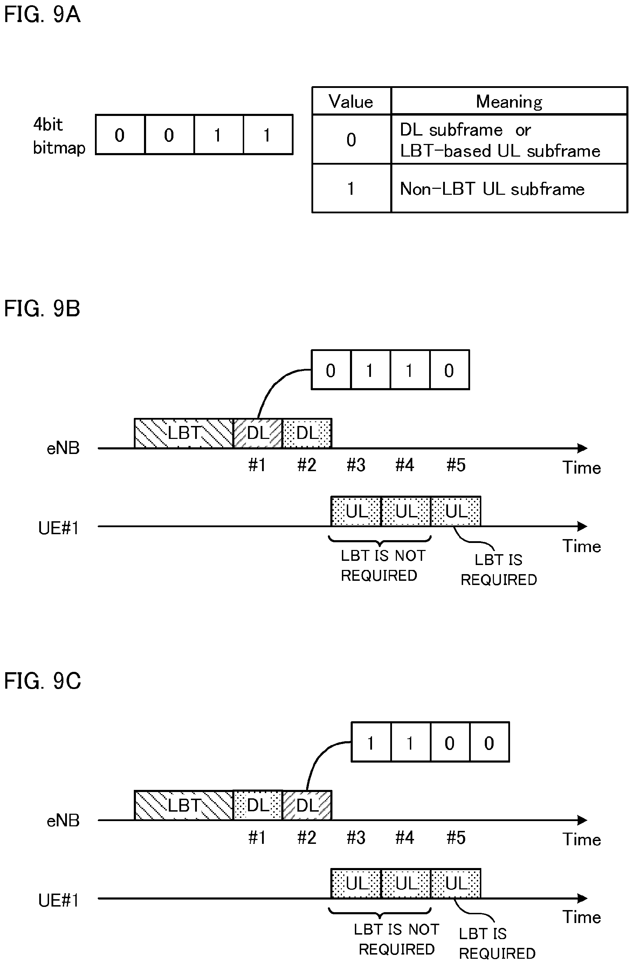

The radio base station can report information as to whether or not UL-LBT is applied the next and subsequent subframes, to a user terminal, by using a DL signal of an unlicensed band. For example, the radio base station configures a four-bit bitmap in downlink control information and, by using this four-bit bitmap, reports the subframe type (UL channel access scheme) of the next and subsequent subframes, per subframe. A user terminal can control whether or not to apply LBT to UL transmission based on a table that corresponds to the bitmap information that is reported ("0" or "1") (see FIG. 9A).

The table of FIG. 9A shows, when the bitmap value is "0," that the corresponding subframe is a DL subframe or a UL subframe that employs LBT. When the bitmap value is "0," a user terminal can judge that the corresponding subframe is a DL subframe or a UL subframe that employs LBT, and control UL transmission accordingly.

Also, the table of FIG. 9A shows, when the bitmap value is "1," that the corresponding subframe is a UL subframe that does not employ LBT. When the bitmap value is "1," a user terminal can judge that the corresponding subframe is a UL subframe that does not employ LBT, and control UL transmission accordingly.

Also, the radio base station can include this bitmap in the first DL signal (or DL subframe) to transmit in the burst period in the unlicensed band (see FIG. 9B). FIG. 9B shows a case in which a 4-ms burst period is configured after DL-LBT (LTB-idle), and a radio base station can transmit DL signals in two subframes after DL-LBT (subframes #1 and #2). For example, the radio base station can include a four-bit bitmap of "0, 1, 1, 0" in the DL signal of subframe #1, and report this to a user terminal. The four bits of the bitmap correspond to subframes #2 to #5, respectively. The user terminal can judge the subframe types of subframe #2 and subsequent subframes based on this bitmap, and control UL transmission accordingly.

Alternatively, the radio base station can include this bitmap only in part of the DL subframes in the unlicensed band (see FIG. 9C). Part of the DL subframes here can be a subframe where the next subframe is a UL subframe (for example, subframe #2 in FIG. 9C). In the case of FIG. 9C, the radio base station can include a four-bit bitmap of "1, 1, 0, 0" in the DL signal of subframe #2, and report this to a user terminal. Here, the four bits of the bitmap correspond to subframe #3 to #6, respectively. The user terminal can judge the subframe types of subframe #3 and subsequent subframes based on this bitmap, and control UL transmission accordingly.

Also, the radio base station can include this bitmap in each DL subframe in an unlicensed band and report to user terminals. Note that, although cases have been shown with FIGs. 9 where the bitmap is four bits, the present embodiment is by no means limited to this. The number of bits of the bit field can be configured as appropriate based on the maximum burst length and so on.

In this way, by allowing a user terminal to judge whether or not to execute UL-LBT based on information that is included in DL signals transmitted in the burst period after DL-LBT, UL-LBT-exempt UL transmission can be carried out adequately, and, furthermore, the decrease of throughput can be reduced.

### (Third Example)

A case will be described with a third example where a user terminal decides the channel access method for UL transmission (for example, whether or not to apply LBT) based on UL grants that are included in DL signals transmitted during the burst period (implicit indication). Note that the third example is suitable to apply to cases in which the maximum burst length in a given cell is greater than a predetermined value (for example, 4 ms).

When the maximum burst length is long (for example, 10 ms), a radio base station can learn, when transmitting a UL grant, whether the UL transmission (UL subframe) which this UL grant commands will be included within the burst period. In this case, the radio base station can indicate the UL channel access method (whether or not to execute UL-LBT) to a user terminal when transmitting a UL grant.

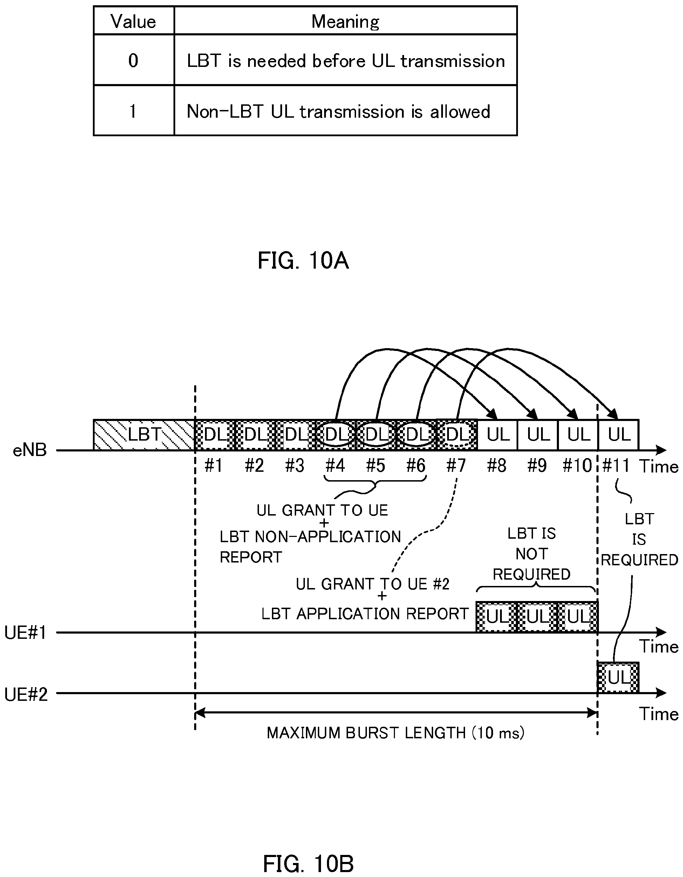

For example, the radio base station can configure a bit field (for example, one bit) in downlink control information (for example, a UL grant) that commands UL transmission in an unlicensed band, and send a command for UL transmission, as well as whether or not LBT is applied to this UL transmission. Alternatively, the radio base station can use a predetermined bit field in existing UL grants and report information as to whether or not LBT is applied to UL transmission, to a user terminal. The user terminal can control UL transmission based on a table that corresponds to the bit information reported in the downlink control information (for example, a UL grant) (see FIG. 10A).

The table of FIG. 10A shows that LBT is needed before UL transmission when the value of bit information is "0." Accordingly, if the value of the bit information included in the downlink control information (UL grant) is "0," the user terminal applies LBT to the UL transmission commanded by this UL grant, and carries out the transmission.

The table of FIG. 10A also shows that LBT is not needed before UL transmission when the value of bit information is "1" (that is, UL-LBT-exempt UL transmission is allowed). Accordingly, if the value of the bit information included in the downlink control information is "1," the user terminal does not apply LBT to the UL transmission commanded by this UL grant, and carries out the transmission.

FIG. 10B shows a case in which a 10-ms burst period is configured after DL-LBT (LTB-idle), and in which a radio base station transmits DL signals in seven subframes (subframes #1 to #7) following DL-LBT. In this case, a user terminal can make UL transmission, without executing LBT, in the period following the DL transmission (here, subframes #8 to #10).

In FIG. 10B, UL transmission in an unlicensed band is commanded to the first user terminal (UE #1), by using the downlink control information of DL subframes #4 to #6 in the burst period. Also, UL transmission in an unlicensed band is commanded to the second user terminal (UE #2) by using the downlink control information of DL subframe #7 in the burst period. In this case, the radio base station can learn, when transmitting the UL grants, whether the UL transmissions which these UL grants command (for example, 4 ms later) will be included within the burst period. Consequently, the radio base station includes information as to whether or not LBT is applied to UL transmission, in the downlink control information (UL grants), and reports these to the user terminals.

In the case illustrated in FIG. 10B, the radio base station includes information to indicate LBT-exempt UL transmission ("1" in FIG. 10A) in the downlink control information of DL subframes #4 to #6, and reports these to UE #1. UE #1 carries out LBT-exempt UL transmission in UL subframes #8 to #10 based on the UL grants that are received. Also, the radio base station includes information to indicate LBT-required UL transmission ("0" in FIG. 10A) in the downlink control information of DL subframe #7, and reports this to UE #2. UE #2 carries out LBT-exempt UL transmission in UL subframe #11 based on the UL grant that is received.

Although a case has been shown with FIG. 10B in which a radio base station transmits commands for UL transmission in an unlicensed band in DL of this unlicensed band, the present embodiment is by no means limited to this. The radio base station can also report commands for UL transmission in an unlicensed band to a user terminal via another cell (for example, a licensed band). Also, when information to indicate that LBT is not applied is not included in a UL grant, a user terminal may decide applying LBT to UL transmission and control transmission accordingly.

In this way, by allowing a user terminal to control whether or not to apply LBT to UL transmission based on UL grants with which information as to whether or not UL-LBT is applied is linked, LBT-exempt UL transmission can be carried out adequately, and, furthermore, the decrease of throughput can be reduced.

### (Structure of Radio Communication System)

Now, the structure of the radio communication system according to an embodiment of the present invention will be described below. In this radio communication system, the radio communication methods according to the embodiments of the present invention are employed. Note that the radio communication methods of the above-described examples may be applied individually or may be applied in combination.

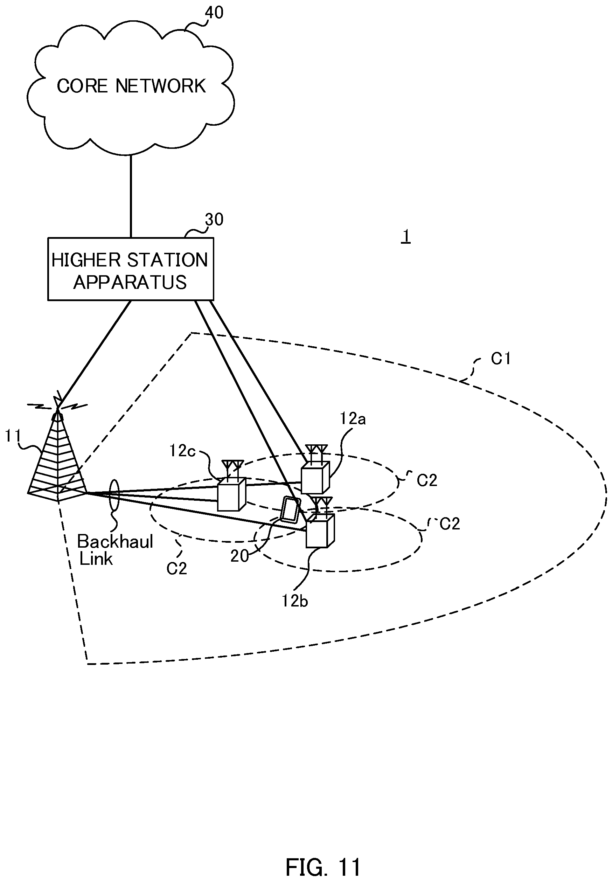

FIG. 11 is a diagram to show an example of a schematic structure of a radio communication system according to an embodiment of the present invention. Note that the radio communication system shown in FIG. 11 is a system to incorporate, for example, an LTE system, super 3G, an LTE-A system and so on. In this radio communication system, carrier aggregation (CA) and/or dual connectivity (DC) to bundle multiple component carriers (CCs) into one can be used. Also, these multiple CCS include licensed band CCs to use licensed bands and unlicensed band CCs to use unlicensed bands may be included. Note that this radio communication system may be referred to as "IMT-Advanced," or may be referred to as "4G," "5G," "FRA"

### (Future Radio Access) and so on.

The radio communication system 1 shown in FIG. 11 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA by using at least two CCs (cells), or use six or more CCs.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Between the radio base station 11 and the radio base stations 12 (or between two radio base stations 12), wire connection (optical fiber, the X2 interface, etc.) or wireless connection may be established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

Also, as downlink reference signals, cell-specific reference signals (CRSs), channel state measurement reference signals (CSI-RSs: Channel State Information-Reference Signals), user-specific reference signals (DM-RSs: Demodulation Reference Signals) for use for demodulation, and other signals are included.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgment signals (HARQ-ACKs) and so on are communicated by the PUCCH. By means of the PRACH, random access preambles (RA preambles) for establishing connections with cells are communicated.

### <Radio base station>

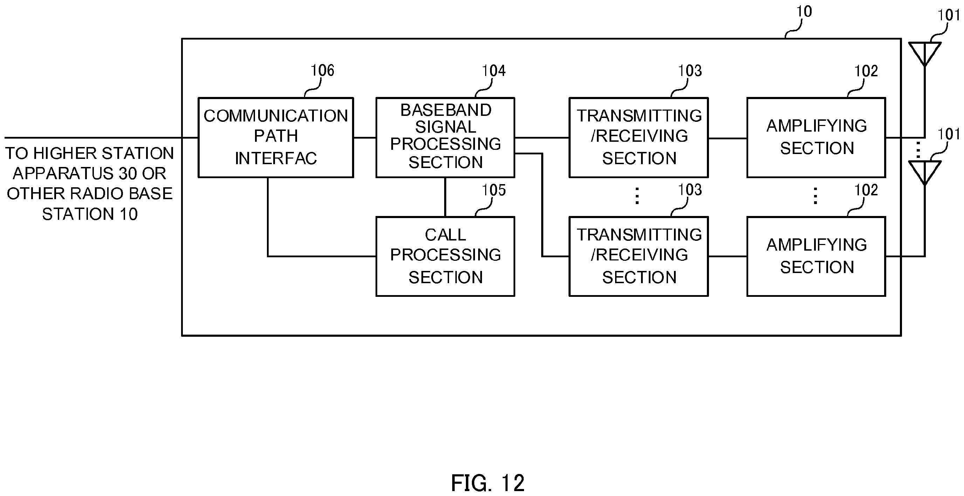

FIG. 12 is a diagram to show an example of an overall structure of a radio base station according to an embodiment of the present invention. A radio base station 10 has a plurality of transmitting/receiving antennas 10, amplifying sections 102, transmitting/receiving sections 103, a baseband signal processing section 104, a call processing section 105 and a communication path interface 106. Note that the transmitting/receiving sections 103 are comprised of transmission sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

For example, the transmitting/receiving sections (transmission sections) 103 transmit downlink control information (for example, a UL grant) that commands UL transmission in an unlicensed band. Also, the transmitting/receiving sections 103 can transmit information about the maximum burst length to a user terminal by using higher layer signaling (for example, RRC signaling, broadcast signals, and so on). Furthermore, when the result of DL-LBT that is executed before a DL signal is transmitted shows LBT-idle, the transmitting/receiving sections 103 can transmit the DL signal in an unlicensed band. For the transmitting/receiving sections 103, transmitters/receivers, transmitting/receiving circuits or transmitting/receiving devices that can be described based on common understanding of the technical field to which the present invention pertains can be used.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. The communication path interface 106 transmits and receives signals to and from neighboring radio base stations 10 (backhaul signaling) via an inter-base station interface (for example, optical fiber, the X2 interface, etc.).

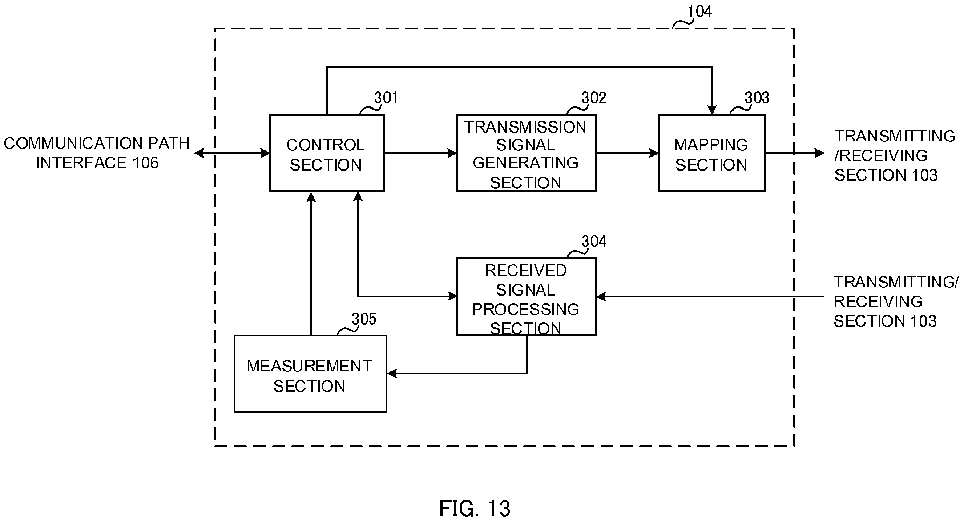

FIG. 13 is a diagram to show an example of a functional structure of a radio base station according to the present embodiment. Note that, although FIG. 13 primarily shows functional blocks that pertain to characteristic parts of the present embodiment, the radio base station 10 has other functional blocks that are necessary for radio communication as well. As shown in FIG. 13, the baseband signal processing section 104 has a control section (scheduler) 301, a transmission signal generating section (generating section) 302, a mapping section 303, a received signal processing section 304 and a measurement section 305.

The control section (scheduler) 301 controls the scheduling (for example, resource allocation) of downlink data signals that are transmitted in the PDSCH and downlink control signals that are communicated in the PDCCH and/or the EPDCCH. Furthermore, the control section (scheduler) 301 also controls the scheduling of system information, synchronization signals, paging information, CRSs, CSI-RSs and so on.

Also, the control section 301 controls the scheduling of uplink reference signals, uplink data signals that are transmitted in the PUSCH, uplink control signals that are transmitted in the PUCCH and/or the PUSCH, random access preambles that are transmitted in the PRACH, and so on. For example, the control section 301 can control commands for UL transmission in an unlicensed band (for example, PUSCH transmission) to be transmitted by using other cells' downlink control information (cross-carrier scheduling). Note that, for the control section 301, a controller, a control circuit or a control device that can be described based on common understanding of the technical field to which the present invention pertains can be used.

The transmission signal generating section 302 generates DL signals based on commands from the control section 301 and outputs these signals to the mapping section 303. For example, the transmission signal generating section 302 generates DL assignments, which report downlink signal allocation information, and UL grants, which report uplink signal allocation information, based on commands from the control section 301. Also, the transmission signal generating section 302 can include information about the LBT to apply to UL transmission, in DL signals transmitted in unlicensed bands. Also, the transmission signal generating section 302 can include information as to whether or not UL-LBT is applied, in UL grants. Note that, for the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. Note that, for the mapping section 303, mapper, a mapping circuit or a mapping device that can be described based on common understanding of the technical field to which the present invention pertains can be used.

The receiving process section 304 performs receiving processes (for example, demapping, demodulation, decoding and so on) of UL signals (for example, delivery acknowledgement signals (HARQ-ACKs), data signals that are transmitted in the PUSCH, and so on) transmitted from the user terminals. The processing results are output to the control section 301. For the received signal processing section 304, a signal processor/measurer, a signal processing/measurement circuit or a signal processing/measurement device that can be described based on common understanding of the technical field to which the present invention pertains can be used.

Also, by using the received signals, the measurement section 305 may measure the received power (for example, the RSRP (Reference Signal Received Power)), the received quality (for example, the RSRQ (Reference Signal Received Quality)), channel states and so on. Also, upon listening before DL signal transmission in unlicensed bands, the measurement section 305 can measure the received power of signals transmitted from other systems and/or the like. The results of measurements in the measurement section 305 are output to the control section 301. The control section 301 can control the transmission of DL signals based on measurement results (listening results) in the measurement section 305.

The measurement section 305 can be constituted by a measurer, a measurement circuit or a measurement device that can be described based on common understanding of the technical field to which the present invention pertains.

### <User terminal>

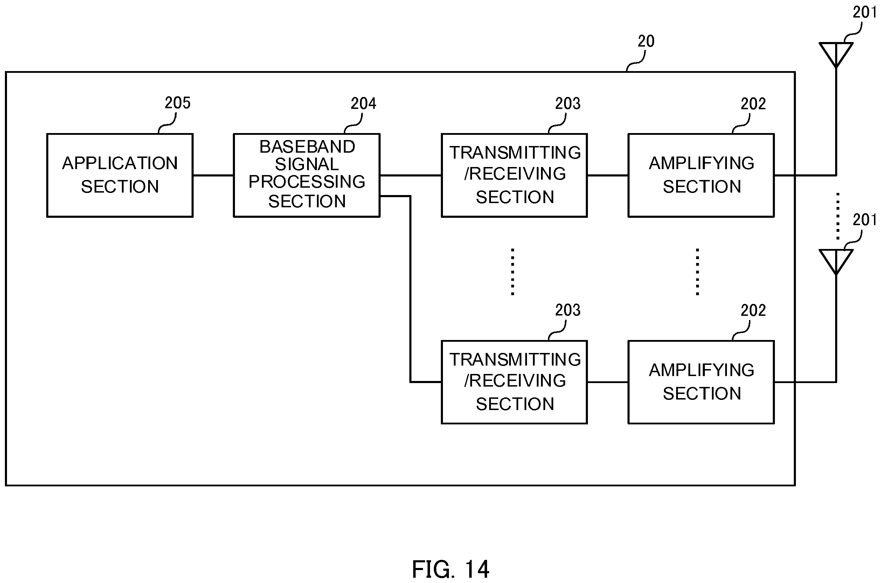

FIG. 14 is a diagram to show an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmission sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections (receiving sections) 203 can receive a DL signal (for example, a UL grant) that commands UL transmission in an unlicensed band. Also, the transmitting/receiving sections 203 can receive information about the maximum burst length that is configured for transmission after DL-LBT. Furthermore, the transmitting/receiving sections 203 can receive DL signals that contain information about listening for UL transmission. In this case, the transmitting/receiving sections 203 can receive the information about listening for UL transmission in a predetermined bit field in downlink control information that is transmitted in an unlicensed band, or in a bitmap. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

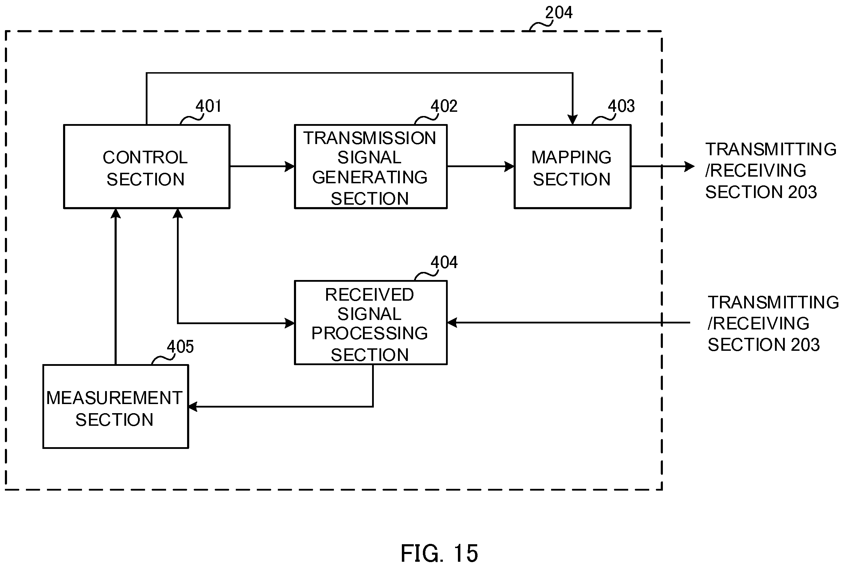

FIG. 15 is a diagram to show an example of a functional structure of a user terminal according to the present embodiment. Note that, although FIG. 15 primarily shows functional blocks that pertain to characteristic parts of the present embodiment, the user terminal 20 has other functional blocks that are necessary for radio communication as well. As shown in FIG. 15, the baseband signal processing section 204 provided in the user terminal 20 has a control section 401, a transmission signal generating section 402, a mapping section 403, a received signal processing section 404 and a measurement section 405.

The control section 401 can control the transmission signal generating section 402, the mapping section 403 and the received signal processing section 404. For example, the control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation/transmission (UL transmission) of uplink control signals (for example, HARQ-ACKs and so on) and uplink data based on downlink control information (UL grants), the result of deciding whether or not retransmission control is necessary for downlink data, and so on. Also, the control section 401 controls the transmission of UL signals based on the result of listening (UL LBT).

Also, the control section 401 can control whether or not listening is applied to UL transmission in an unlicensed band based on DL signals that are transmitted after listening for DL transmission in the unlicensed band.

For example, the control section 401 can control whether or not to apply listening to UL transmission based on information about the burst period that is configured after DL-LBT in an unlicensed band, whether or not DL signals are detected in the unlicensed band and UL transmission timings based on UL transmission commands. To be more specific, when, in the burst period that is configured after DL-LBT in an unlicensed band, it can be judged that a subframe in which UL transmission is commanded in included within the burst period and that DL transmission continues up to immediately before one or more consecutive UL subframes, it is possible to carry out UL transmission without executing listening.

Also, based on the information about listening for UL transmission that is included in DL signals transmitted in the unlicensed band, the control section 401 can control whether or not to apply listening to UL transmission. Here, the information about listening for UL transmission can be structured to include information as to whether or not the next and subsequent subframes following the subframe in which this listening-related information is received are UL subframes that do not employ listening for UL transmission.

Also, based on information about listening for UL transmission included in UL transmission commands, the control section 401 can control whether or not to apply listening to UL transmission. When LBT is executed before UL transmission, the control section 401 can control the UL transmission, taking into consideration the measurement results output from the measurement section 405 (including, for example, received power from other systems, and so on). For the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs) in response to DL signals, channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs the receiving processes (for example, demapping, demodulation, decoding and so on) of the DL signals (for example, downlink control signals that are transmitted from the radio base station in the PDCCH/EPDCCH, downlink data signals transmitted in the PDSCH, and so on). The received signal processing section 404 outputs the information received from the radio base station 10, to the control section 401 and the measurement section 405. Note that, for the received signal processing section 404, a signal processor/measurer, a signal processing/measurement circuit or a signal processing/measurement device that can be described based on common understanding of the technical field to which the present invention pertains can be used. Also, the received signal processing section 404 can constitute the receiving section according to the present invention.

Also, the measurement section 405 may measure the received power (for example, the RSRP (Reference Signal Received Power)), the received quality (for example, the RSRQ (Reference Signal Received Quality)), channel states and so on, by using the received signals. Furthermore, upon listening that is executed before UL signals are transmitted in unlicensed bands, the measurement section 405 can measure the received power of signals transmitted from other systems and so on. The results of measurements in the measurement section 405 are output to the control section 401. The control section 401 can control the transmission of UL signals based on measurement results (listening results) in the measurement section 405.

The measurement section 405 can be constituted by a measurer, a measurement circuit or a measurement device that can be described based on common understanding of the technical field to which the present invention pertains.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and user terminals 20 may be implemented with a computer device that includes a processor (CPU), a communication interface for connecting with networks, a memory and a computer-readable storage medium that holds programs. That is, radio base stations and user terminals according to one embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the examples/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2015-114900, filed on June 5, 2015, including the specification, drawings and abstract, is incorporated herein by reference in its entirety.

## Claims

1. A user terminal that communicates by using at least a first cell in which listening is executed before signals are transmitted, the user terminal comprising:
a receiving section that receives DL signals that contain UL transmission commands; and
a control section that controls UL transmission based on the UL transmission commands,
wherein the control section controls whether or not to apply listening to UL transmission based on DL signals transmitted in the first cell.

2. The user terminal according to claim 1, wherein the control section controls whether or not to apply listening to UL transmission based on information about a burst period that is configured after listening for DL transmission in the first cell, whether or not DL signals are detected in the first cell, and a UL transmission timing based on a UL transmission command.

3. The user terminal according to claim 2, wherein the control section carries out UL transmission without applying listening when a subframe for this UL transmission is included in the burst period that is configured after the listening for DL transmission in the first cell and DL signals are transmitted up to a subframe before the subframe for this UL transmission.

4. The user terminal according to claim 1, wherein the control section controls whether or not to apply listening to UL transmission based on information about listening for UL transmission that is included in the DL signals transmitted in the first cell.

5. The user terminal according to claim 4, wherein the information about listening for UL transmission comprises information as to the next and subsequent subframes of a subframe in which a DL signal containing this listening-related information is received are UL subframes that do not employ listening for UL transmission.

6. The user terminal according to claim 5, wherein the receiving section receives the information about listening for UL transmission in a predetermined bit field in downlink control information that is transmitted in the first cell, or in a bitmap.

7. The user terminal according to one of claim 1 to claim 6, wherein the receiving section receives a DL signal containing a command for UL transmission in the first cell in a second cell, which is different from the first cell.

8. The user terminal according to claim 1, wherein the control section controls whether or not to apply listening to UL transmission based on information about listening for UL transmission contained in the UL transmission commands.

9. A radio base station that communicates with a user terminal by using at least a first cell in which listening is executed before signals are transmitted, the radio base station comprising:
a transmission section that transmits DL signals that contain UL transmission commands; and
a receiving section that receives UL signals which the user terminal transmits based on the UL transmission commands,
wherein the transmission section transmits DL signals that contain information as to whether or not apply listening to UL transmission, during a burst period that is configured after listening for DL transmission in the first cell.

10. A radio communication method for a user terminal that communicates by using at least a first cell in which listening is executed before signals are transmitted, the radio communication method comprising the steps of:
receiving DL signals that contain UL transmission commands; and
transmitting UL signals based on the UL transmission commands,
wherein whether or not to apply listening to the transmission of the UL signals is controlled based on DL signals transmitted in the first cell.
